# EUROPÄISCHE PATENTSCHRIFT

(11) **EP 1 036 677 B1**
(45) Veröffentlichungstag und Bekanntmachung des Hinweises auf die Patenterteilung: **18.08.2004**
(21) Anmeldenummer: 00102188.0
(22) Anmeldetag: 09.02.2000
(51) Int. Cl.: B60G 3/20, B60G 15/06, B60G 13/00, F16F 9/54

(54) **Radaufhängung für ein Kraftfahrzeug**
Wheel suspension for a motor vehicle
Suspension de roue pour un véhicule automobile

(30) Priorität: 15.03.1999 DE 19911340
(43) Veröffentlichungstag der Anmeldung: 20.09.2000
(73) Patentinhaber: Volkswagen Aktiengesellschaft, 38436 Wolfsburg (DE)
(72) Erfinder: Hinze, Thilo, Dr., 38162 Klein Schöppenstedt (DE)

(56) Entgegenhaltungen:
- DE-A- 3 233 878
- DE-A- 19 708 422
- DE-C- 4 001 143
- FR-A- 2 101 995
- GB-A- 2 269 881

## Beschreibung

Die Erfindung betrifft eine Radaufhängung für eine Kraftfahrzeugachse eines Kraftfahrzeugs, die zumindest einen, gelenkig mit einem Radträger und einer Karosserie des Kraftfahrzeuges verbundenen Lenker und einen Stoßdämpfer mit einem Behälterrohr und einer in das Behälterrohr gegen eine Federkraft einschiebbaren Dämpferstange aufweist, wobei die Dämpferstange mit einem gefederten Bereich der Karosserie und das Behälterrohr über ein Dämpferlager mit dem Lenker verbunden ist.

Derartige Radaufhängungen für Kraftfahrzeuge sind sowohl für die sogenannten Verbundlenker-Hinterachsen als auch als Aufhängung einer Multilenker-Achse allgemein bekannt. Der Stoßdämpfer ist hier unterhalb des Behälterrohres gelagert und weist hierzu einen Flansch auf, der mit einem Gummilager verbunden ist, das wiederum mit einem Lenker der Radaufhängung, insbesondere einem Querlenker im Falle einer Multilenker-Radaufhängung oder dem Längslenker einer Verbundlenker-Hinterachse verbunden ist. Die während des Einfedervorgangs erforderliche Beweglichkeit des Stoßdämpfers ist durch die gelenkige Lagerung im Gummilager hinreichend gewährleistet. Oft ist der Stoßdämpfer bei derartigen Radaufhängungen Teil eines Federbeines, das heißt konzentrisch zum Stoßdämpfer ist außen um das Behälterrohr herum gewunden eine Schraubenfeder angeordnet, die die Fahrzeugfederung übernimmt, während der Stoßdämpfer zum Abbau der Federschwingung dient. Eine dem Oberbegriff des Anspruch 1 entsprechende Radaufhängung ist aus der DE 40 01 143 C bekannt.

Obwohl diese bekannten Radaufhängungen eine fahrdynamisch günstige Eigenschaft aufweisen, haben sie doch den Nachteil, daß sie aufgrund der unterhalb des Behälterrohrs angeordneten Lagerung ein verhältnismäßig großes Bauvolumen erfordern. Insbesondere bei Kombi-Fahrzeugen, aber auch bei Kompakt-Fahrzeugen oder Stufenhecklimousinen wird zur Erreichung eines möglichst großen Kofferraumvolumens und einer möglichst großen lichten Breite der Ladefläche ein möglichst niedrig bauendes Federbein bzw. eine kompakte Radaufhängung gewünscht. Gerade bei Kombi-Fahrzeugen wird durch die nach oben stehenden Federbeine und die damit verbundene Einengung der lichten Breite der Nutzwert des Fahrzeugs aufgrund der Federung und deren Platzbedarf eingeschränkt.

Zur Lösung dieses Problems werden heutzutage häufig Hinterradaufhängungen mit horizontal angeordneten Federn und rechtwinkliger Kraftumleitung eingesetzt, wobei sich hier im Vergleich zu im wesentlichen vertikal angeordneten Federbeinen nicht so günstige Fahreigenschaften realisieren lassen.

Aufgabe der Erfindung ist es daher, eine Radaufhängung für die Achse eines Fahrzeugs, insbesondere für die Hinterachse eines Personenwagens zu schaffen, die ein möglichst geringes Bauvolumen in vertikaler Richtung erfordert.

Diese Aufgabe wird durch eine radaufhängung nach Auspruch 1 gelöst.

Durch die erfindungsgemäße Ausgestaltung des Radaufhängung ist nunmehr das untere Lager des Stoßdämpfers nicht mehr unter dem Behälterrohr, sondern neben dem Behälterrohr angeordnet. Dabei kann dieses untere Lager am unteren Ende des Behälters, bei entsprechender Bodenfreiheit aber auch weiter höher angeordnet sein, so daß der Stoßdämpfer relativ zur Radachse nach unten versetzt werden kann. Hierdurch ergibt sich bei gleichbleibendem Dämpferweg eine deutliche Reduzierung der benötigten Bauhöhe in Richtung der Dämpferachse. Das innere Lagerelement kann auf verschiedenste Weise mit dem Behälterrohr verbunden sein, bei entsprechend großer Serie wäre es sogar möglich, einen Bereich des Behälterrohres bereits als inneres Lagerelement auszubilden.

Bei einer bevorzugten Ausgestaltung ist jedoch das innere Lagerelement als Hülse oder Ring ausgebildet, der auf das Behälterrohr aufgeschoben wird. Da der Stoßdämpfer gegen axiales Verschieben im inneren Lagerring gesichert sein muß, kann dies entweder durch eine Preßpassung geschehen, das heißt der Ring wird auf das Behälterrohr aufgepreßt oder aufgeschrumpft, oder über eine sonstige stoff- bzw. formschlüssige Verbindung erfolgen, solange die Rundheit des Innenzylinders nicht beeinträchtigt wird. Bei dieser Ausgestaltung können übliche Stoßdämpfer verwendet werden, so daß eine Neukonstruktion nicht erforderlich ist. Der innere Lagerring ist über ein geeignetes Lager mit dem Querlenker verbunden, zum Beispiel über ein äußeres Lagerelement, das seinerseits starr mit dem Querlenker verbunden ist.

Das äußere Lagerelement kann ebenfalls als zum Behälterrohr konzentrischer Lagerring ausgebildet sein, wobei das Behälterrohr das äußere Lagerelement derart durchdringt, daß das ringförmige innere Lagerelement von dem äußeren Lagerring umschlossen ist. Zur Lagerung des inneren Lagerelements in dem äußeren Lagerelement kann ein zwischen diesen beiden Elementen angeordneter ringförmiger Aufnahmering vorgesehen sein, der hinreichend elastische Eigenschaften aufweist, so daß die geometrische Freigängigkeit des inneren Lagerelements relativ zum äußeren Lagerelement gewährleistet ist.

Der Aufnahmering ist bei dieser Ausgestaltung bevorzugt mit einer ringförmigen, nutartigen Aufnahme versehen, in die der äußere Lagerring einsetzbar ist. Hierdurch ergibt sich eine geführte Gummilagerung für den äußeren Lagerring, die bewirkt, daß das Behälterrohr um einige Grade im Dämpferlager schwenkbar ist. Das äußere Lagerelement ist bevorzugt starr mit dem Querlenker verbunden, wobei bei einer bevorzugten Ausgestaltung der Querlenker eine mittige, vertikale Ausnehmung aufweist, innerhalb derer der äußere Lagerring angeordnet ist. Die Verbindung zwischen dem Lenker und dem äußeren Lagerelement kann über eine Schraubverbindung erfolgen, wobei das äußere Lagerelement in diesem Fall bevorzugt mit Innengewinden versehen ist, in die Verbindungsschrauben einschraubbar sind.

Aus fahrdynamischen Gründen ist es besonders günstig, wenn die ungefederten Massen eines Fahrzeugs so gering wie möglich gehalten werden. Aus diesem Grunde sollte auch das Dämpferlager der Radaufhängung, das auf der ungefederten Seite der Radaufhängung angeordnet ist, möglichst leicht ausgebildet sein, so daß eine günstige Ausgestaltung des äußeren Lagerrings im Bereich der Gewindebohrungen für die Befestigungsschrauben mit dem Lenker Verdickungen aufweist, die eine ausreichende Tiefe der Gewindebohrung gewährleistet. Auf diese Weise kann in dem Bereich des äußeren Lagerelements, in dem kein Gewinde angeordnet ist, Material und damit Gewicht eingespart werden. Zusätzlich ergibt sich durch die Verjüngung des äußeren Lagerelements, beispielsweise in den beiden zur Fahrtrichtung quer angeordneten Richtungen, eine größere Nachgiebigkeit des Dämpferlagers, da hier der elastische Aufnahmering des inneren Lagerelements eine größere Breite aufweist und somit die Federkraft geringer ist. Es ergibt sich so also ein Lager, das in Fahrtrichtung einen größeren Widerstand gegen eine Lagerbewegung aufweist als in Fahrzeugquerrichtung.

Das äußere Lagerelement kann anstelle einer Schraubverbindung auch über andere Verbindungsmöglichkeiten mit dem Lenker verbunden sein, insbesondere ist es auch möglich, den Lenker bereits so auszugestalten, daß das äußere Lagerelement einstückig mit diesem verbunden ist, das heißt also, daß das äußere Lagerelement und der Lenker aus einem Teil gefertigt sind. Das innere Lagerelement wird insbesondere dann, wenn ein elastischer Aufnahmering zur Lagerung des ringförmigen äußeren Lagerelements verwendet wird, bevorzugt mit einem oberen und einem unteren hervorspringenden, kragenartigen Randbereich ausgebildet, wobei zwischen diesem oberen und dem unteren Randbereich der Aufnahmering eingesetzt ist. Insbesondere wenn die Radaufhängung ein sogenanntes Federbein aufweist, also die Schraubenfeder zur Federung des Fahrzeugs konzentrisch zum Stoßdämpfer angeordnet ist, ist diese Ausgestaltung günstig, weil in diesem Fall der obere, kragenartig hervorspringende Randbereich als Widerlager für die Feder ausgebildet werden kann.

Um die Montage des Dämpferlagers zu ermöglichen, kann das innere Lagerelement zweiteilig ausgebildet sein, so daß zunächst ein oberes Ringelement mit dem hervorspringenden oberen Randbereich auf das Behälterrohr aufgepreßt und anschließend eine beispielsweise vormontierte Kombination aus dem unteren Teil des inneren Lagerelements mit dem äußeren Lagerelement auf das Behälterrohr aufgeschoben werden kann. Zur Sicherung der Lagerwirkung ist es dabei ausreichend, wenn der obere Ring hinreichend fest mit dem Behälterrohr verbunden ist. Der elastische Aufnahmering ist bevorzugt ein Gummiring, der vor der Montage mit dem unteren Teil des inneren Lagerelements in das ringförmige äußere Lagerelement einsetzbar ist.

Der elastische Aufnahmering kann an den Trägerring des inneren Lagerelements, insbesondere an den oberen Randbereich und/oder den unteren Randbereich im Rahmen der Herstellung des elastischen Aufnahmerings anvulkanisiert sein, wobei der Trägerring bzw. Teile hiervon in die Form zur Herstellung des vulkanisierten Gummirings eingelegt werden und anschließend durch die adhäsive Wirkung des Gummiwerkstoffes über eine stoffschlüssige Verbindung an dem Trägerring befestigt ist. Bevorzugt wird diese Verbindung nicht nur zwischen dem elastischen Aufnahmering und dem Trägerring eingesetzt sondern auch zur Befestigung des äußeren Lagerelementes an dem elastischen Aufnahmering. In diesem Fall wird auch dieser während der Herstellung des Gummibauteiles in die Form eingelegt und dann über die stoffschlüssige Verbindung durch den Gummiwerkstoff an dem Aufnahmering befestigt.

Die erfindungsgemäße Radaufhängung kann sowohl mit einer Mehrlenker-Radaufhängung als auch mit einer Radaufhängung für eine Verbundlenker-Hinterachse verwendet werden. Im Falle einer Multilenker-Achse ist das Dämpferlager bevorzugt an einem Querlenker der Radaufhängung angeordnet, während im Falle einer Verbundlenker-Hinterachse das Federbein bevorzugt zwischen dem Längslenker und der Karosserie vorgesehen ist.

Weitere Vorteile und Einzelheiten der Erfindung ergeben sich aus den Unteransprüchen und aus der nachfolgenden Beschreibung eines bevorzugten Ausführungsbeispiels anhand der Zeichnungen.

In den Zeichnungen zeigt:
- Fig. 1: eine perspektivische Darstellung einer erfindungsgemäßen Radaufhängung ohne den Radträger,
- Fig. 2: den Stoßdämpfer der Radaufhängung aus Figur 1 in einer Seitenansicht,
- Fig. 3: eine perspektivische Ansicht des Dämpferlagers der in den Figuren 1 und 2 dargestellten Radaufhängung,
- Fig. 4: eine Seitenansicht auf das in Figur 3 dargestellte Dämpferlager aus einem ersten Winkel,
- Fig. 5: eine Seitenansicht auf das in den Figuren 3 und 4 dargestellte Dämpferlager aus einem zweiten Winkel,
- Fig. 6: eine Aufsicht auf das in den Figuren 3 bis 5 dargestellte Dämpferlager,
- Fig. 7: die Seitenansicht des Dämpferlagers nach Figur 4 im Schnitt gemäß der Schnittlinie I- I in Fig. 6 und in
- Fig. 8: die Seitenansicht des Dämpferlagers nach Figur 5 im Schnitt gemäß der Schnittlinie II-II in Fig. 6.

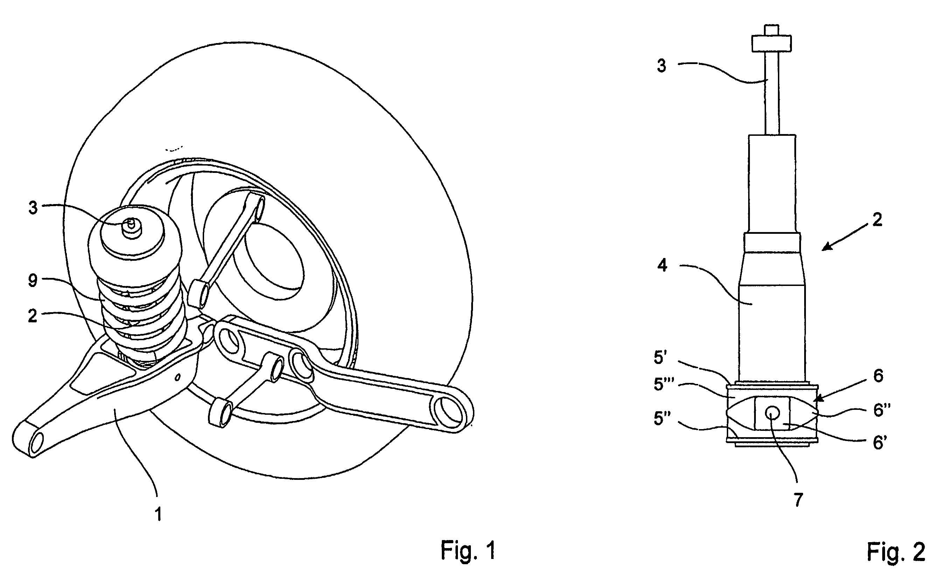

In Fig. 1 ist eine Radaufhängung in perspektivischer Darstellung gezeigt, wobei hier zur Verdeutlichung der relevanten Funktionsteile der Radträger sowie Einzelheiten der Radlagerung nicht dargestellt sind. Die Radaufhängung weist ein Federbein mit einer Schraubenfeder 9 und einem konzentrisch innerhalb dieser Schraubenfeder angeordneten Stoßdämpfer 2 auf, der im unteren Bereich über ein Dämpferlager mit einem Querlenker 1 schwenkbar verbunden ist. Zur Einsparung von Bauraum in vertikaler Richtung ist das Dämpferlager nicht unterhalb des Stoßdämpfers 2, sondern im Bereich der Seitenwandung des Behälterrohres angeordnet. Der Querlenker 1 weist eine Ausnehmung auf, über die der Stoßdämpfer 2 in den Querlenker hineingeführt ist und die das Dämpferlager aufnimmt. Diese Ausnehmung im Querlenker 1 ist so groß ausgestaltet, daß die Verschwenkbarkeit des Stoßdämpfers 2 über den gesamten Federweg des Kraftfahrzeugs gewährleistet ist.

In Fig. 2 ist der Stoßdämpfer mit dem Dämpferlager aus Fig. 1 in einer Seitenansicht dargestellt. Das Dämpferlager ist am unteren Ende des Behälterrohres 4 angeordnet und weist einen inneres Lagerelement 5 sowie ein äußeres Lagerelement 6 auf. Das innere Lagerelement 5 wiederum besteht aus drei funktionalen Teilen, nämlich einem oberen Randbereich 5', einem unteren Randbereich 5'' und einem zwischen diesen Randbereichen angeordneten Aufnahmering 5'''. Der Aufnahmering 5''' ist ein elastischer Ring, beispielsweise ein Gummiring, der eine im wesentlichen ringförmige Nut 8 aufweist, in der ein ringförmiges äußeres Lagerelement 6 eingelegt ist. Dieses äußere Lagerelement 6 wiederum wird mit dem Querlenker 1 befestigt, so daß der Stoßdämpfer über den Aufnahmering 5''' elastisch gelagert ist.

Das äußere Lagerelement 6 weist einen verdickten Bereich 6' mit zumindest einer Gewindebohrung 7 auf, über die das äußere Lagerelement mit dem Querlenker 1 verschraubt werden kann. Zwischen diesen verdickten Bereichen 6', von denen bevorzugt zwei gegenüberliegende Bereiche vorgesehen sind, ist ein sich verjüngender Bereich 6'' angeordnet, der zum einen eine Reduktion des Gewichtes des äußeren Lagerelements 6 bewirkt und zum anderen eine höhere Nachgiebigkeit des äußeren Lagerelements 6 in Schwenkrichtung um die zur Papierebene vertikale Richtung verursacht. Über die Form und Lage dieses sich verjüngenden Bereichs kann die Charakteristik des Dämpferlagers je nach Anforderungen durch die Fahrdynamik eingestellt werden.

Der Stoßdämpfer 2 weist neben dem Behälterrohr 4 eine nach oben ragende Dämpferstange 3 auf, mit der er in einem oberen Dämpferlager befestigt ist. Der obere Randbereich 5' des inneren Lagerelements 5 ist fest mit der Behälterwand 4 verbunden, beispielsweise über eine Preßpassung, und derart ausgestaltet, daß er als unteres Lager für die auf die Dämpferstange 3 und das Behälterrohr 4 aufzusteckende Schraubenfeder (hier nicht dargestellt) bildet.

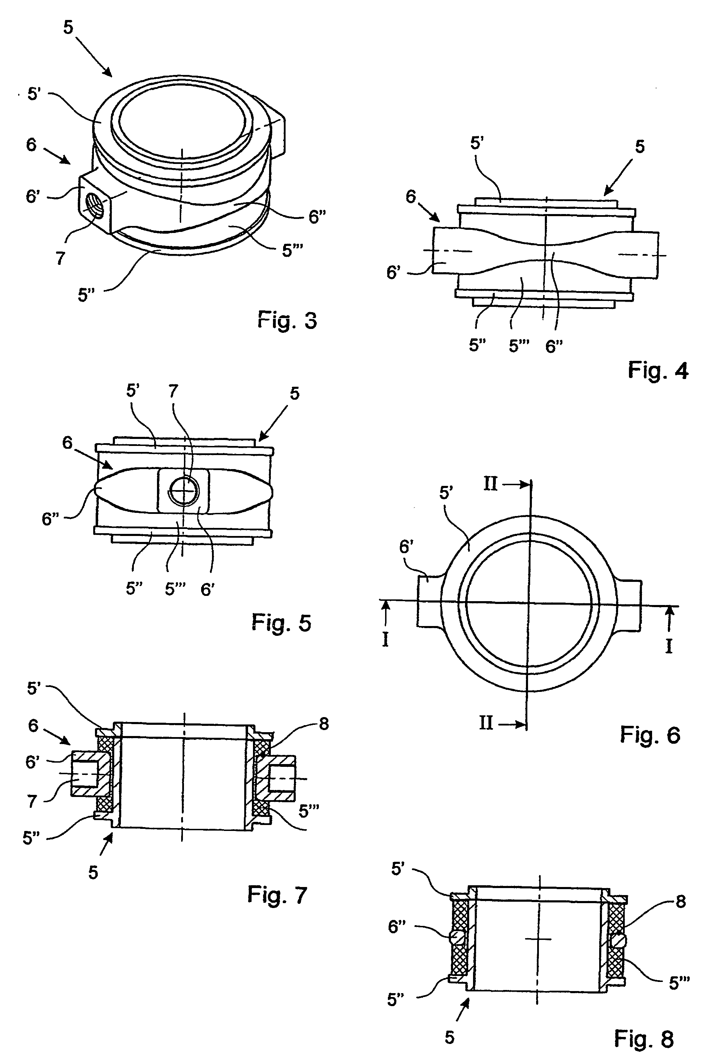

In Fig. 3 ist das Dämpferlager aus Fig. 2 in einer Detailansicht perspektivisch dargestellt. Das Dämpferlager weist zwei verdickte Bereiche 6' des äußeren Lagerelements 6 auf, die einander gegenüberliegend angeordnet sind. Das ringförmige äußere Lagerelement ist zwischen diesen verdickten Bereichen 6' taillenartig eingeschnürt, so daß sich rechtwinklig zu der Achse der Gewindebohrungen 7 ein sich verjüngender Bereich 6'' ergibt. Diese Verjüngung des Bereiches 6'' bewirkt wiederum, daß die Ringnut 8innerhalb des Aufnahmerings 5''' in diesem Bereich kleiner wird, wodurch wiederum das federnde Material des aus Gummi gefertigten Aufnahmerings 5'' vermehrt wird. Hierdurch ergibt sich eine größere Nachgiebigkeit des Lagers in Richtung der sich verjüngenden Bereiche 6''.

In den Fig. 4 und 5 ist das Lager aus Fig. 3 in einer Seitenansicht dargestellt. Neben dem kragenartig hervorspringenden oberen Randbereich 5' und unteren Randbereich 5'' des inneren Lagerelements 5 ist bei dieser Darstellung die Form des äußeren Lagerelements 6 mit dem verdickten Bereich 6' und dem sich verjüngenden Bereich 6'' zu erkennen. Das äußere Lagerelement 6 weist jeweils zwei sich gegenüberliegende sich verjüngende Bereiche 6'' und korrespondierend hierzu zwei verdickte Bereiche 6' auf.

In Fig. 6 ist eine Draufsicht auf das Dämpferlager aus den Fig. 3 bis 5 dargestellt, wobei die verdickten Bereiche 6' und der kragenartig hervorspringende Bereich 5' des inneren Lagerelements 5 gut zu erkennen ist. Auf diesem durch den kragenartig hervorspringenden Bereich 5' gebildeten Absatz kann sich die Feder 9 der Radaufhängung abstützen.

In Fig. 7 ist der Schnitt I-I aus Fig. 6 dargestellt, wobei der aus Gummi gefertigte Aufnahmering 5''' sowie die Anordnung des äußeren Lagerelements 6 innerhalb der ringförmigen Nut 8 zu erkennen ist. Der obere Randbereich 5' des inneren Lagerelements 5 ist als separates Bauteil ausgebildet, so daß die Montierbarkeit des Dämpferlagers gewährleistet ist, indem zunächst dieser obere Randbereich auf das Behälterrohr 4 aufgepreßt wird. Der untere Komplex des Dämpferlagers wird dann vormontiert, indem zunächst der Aufnahmering 5''' in das äußere Lagerelement 6 eingelegt wird, was aufgrund seiner elastischen Konsistenz möglich ist. Anschließend werden beide Bauteile auf den unteren Randbereich 5'', der hier hülsenartig nach oben verlängert ist, aufgeschoben, und anschließend dieser untere Komplex auf das Behälterrohr 4 gepreßt. Die verdickten Bereiche 6' des äußeren Lagerelements 6' sind vierkantförmig ausgebildet, was die drehfeste Aufnahme innerhalb eines entsprechenden Lagers im Querlenker 1 ermöglicht. Auf diese Weise ist gewährleistet, daß die Schwenkbewegung zwischen dem inneren und äußeren Lagerelement 5, 6 erfolgt, und sich nicht das äußere Lagerelement 6 innerhalb des Querlenkers 1 verdreht.

Wie aus den Fig. 7 und 8 zu erkennen ist, ist die Dicke des äußeren Lagerelements 6 im Bereich der sich verjüngenden Bereiche 6'' etwa auf 1/3 der verdickten Bereiche 6' reduziert. Korrespondierend zu dieser Dickenreduzierung nimmt ebenfalls der lichte Durchmesser der Nut 8 ab und das elastische Material im Bereich des Aufnahmerings 5''' zu. Zur besseren Führung des Aufnahmerings 5''' ist unterhalb dieses Ringes 5''' der untere kragenartig hervorspringende Randbereich 5'' angeordnet. Dies bewirkt eine räumliche Festlegung des Aufnahmerings 5''', so daß bei Belastung des Dämpferlagers der Aufnahmering 5''' komprimiert werden muß und nicht nach unten auswandern kann.

Das erfindungsgemäße Dämpferlager kann wie in Fig. 2 dargestellt am unteren Ende des Behälterrohres 4 angeordnet sein. Es ist jedoch genausogut möglich, daß das Dämpferlager weiter hochgeschoben wird, so daß der Dämpfer aus dem Querlenker 1 nach unten herausragt. Voraussetzung ist jedoch, daß eine ausreichende Bodenfreiheit des Fahrzeugs zur Verfügung steht, damit der nach unten hervorragende Stoßdämpfer 2 nicht der Gefahr einer mechanischen Beschädigung ausgesetzt ist. Durch das Versetzen des Dämpferlagers auf die Behälterseitenwand kann die Bauhöhe der Radaufhängung wesentlich reduziert werden.

### BEZUGSZEICHENLISTE

- 1: Lenker
- 2: Stoßdämper
- 3: Dämpferstange
- 4: Behälterrohr
- 5: inneres Lagerelement
- 5': oberer Randbereich
- 5": unterer Randbereich
- 5''': Aufnahmering
- 6: äußeres Lagerelement
- 6': verdickter Bereich des äußeren Lagerelementes
- 6'': Bereich des äußeren Lagerelementes mit verjüngtem Querschnitt
- 7: Gewindebohrung
- 8: Nut
- 9: Schraubenfeder

## Patentansprüche

1. Radaufhängung für ein Kraftfahrzeug, die zumindest einen, gelenkig mit einem Radträger und einer Karosserie des Kraftfahrzeuges verbundenen Lenker (1) und einen Stoßdämpfer (2) mit einem Behälterrohr (4) und einer in das Behälterrohr (4) gegen eine Federkraft einschiebbaren Dämpferstange (3) aufweist, wobei die Dämpferstange (3) mit einem gefederten Bereich der Karosserie und das Behälterrohr (4) über ein Dämpferlager (5,6) mit dem Lenker (1) verbunden ist, wobei das Dämpferlage (5,6) konzentrisch am Behälterrohr (4) angeordnet ist und ein mit der Seitenwandung des Behälterrohres (4) verbundenes inneres Lagerelement (5) sowie ein mit dem Lenker (1) verbundenes äußeres Lagerelement (6) aufweist, **dadurch gekennzeichnet, daß** das äußere Lagerelement (6) um das innere Lagerelement (5) schwenkbar ist, so dass das Behälterrohr (4) mit dem Lenker (1) gelenkig verbunden ist.

2. Radaufhängung nach Anspruch 1, **dadurch gekennzeichnet, daß** das innere Lagerelement (5) eine auf das Behälterrohr (4) aufgeschobene Hülse oder ein aufgeschobener Ring ist, wobei das innere Lagerelement (5) über eine Preßpassung, eine form- oder stoffschlüssige Verbindung mit dem Behälterrohr (4) verbunden ist.

3. Radaufhängung nach Anspruch 1 oder 2, **dadurch gekennzeichnet, daß** das äußere Lagerelement (6) ein zum Behälterrohr (4) konzentrisch angeordneter Lagerring (6) ist, der das innere Lageretement (5) umschließt, das eine insbesondere ringnutförmige Aufnahme zur federnden oder angelenkten Aufnahme des äußeren Lagerringes aufweist.

4. Radaufhängung nach einem der vorstehenden Ansprüche, **dadurch gekennzeichnet, daß** das äußere Lagerelement (6) mit dem Lenker (1), insbesondere durch eine Schraubverbindung starr verbunden ist.

5. Radaufhängung nach einem der vorstehenden Ansprüche, **dadurch gekennzeichnet, daß** das äußere Lagerelement (6) mit dem Lenker (1) einstückig verbunden ist.

6. Radaufhängung nach einem der vorstehenden Ansprüche, **dadurch gekennzeichnet, daß** das innere Lagerelement (5) von einem auf das Behälterrohr (4) aufgeschobenen Trägerring mit einem kragenartig nach außen hervorspringenden oberen Randbereich (5') und einem kragenartigen unteren Randbereich (5'') und einem zwischen dem oberen Randbereich (5') und dem unteren Randbereich (5'') angeordneten elastischen Aufnahmering (5''') mit einer im wesentlichen ringförmigen Nut (8) gebildet ist, in die das äußere Lagerelement (6) eingreift.

7. Radaufhängung nach dem vorstehenden Anspruch, **dadurch gekennzeichnet, daß** der Trägerring des inneren Lagerelementes (5) zumindest zweiteilig ausgebildet ist, wobei der obere Randbereich (5') und der untere Randbereich (5") jeweils von einem einzelnen Bauteil gebildet sind und zumindest der obere Randbereich (5') am Behälterrohr (4) befestigt ist.

8. Radaufhängung nach Anspruch 6 oder 7, **dadurch gekennzeichnet, daß** sie ein Federbein aufweist, das von dem Stoßdämpfer (2) und einer konzentrisch zu dem Stoßdämpfer (2) angeordneten Schraubenfeder (9) gebildet ist, wobei sich das untere Ende der Schraubenfeder (9) auf dem oberen Randbereich (5') des Trägerringes abstützt.

9. Radaufhängung nach einem der Ansprüche 6, 7, oder 8, **dadurch gekennzeichnet, daß** der elastische Aufnahmering (5''') ein Gummiring ist.

10. Radaufhängung nach dem vorstehenden Anspruch und Anspruch 6, **dadurch gekennzeichnet, daß** der elastische Aufnahmering (5''') an den Trägerring des inneren Lagerelements, insbesondere an den oberen Randbereich (5') und den unteren Randbereich (5'') anvulkanisiert und damit über eine stoffschlüssige Verbindung an dem Trägerring befestigt ist.

11. Radaufhängung nach Anspruch 9 oder 10, **dadurch gekennzeichnet, daß** der elastische Aufnahmering (5''') an das äußere Lagerelement (6) anvulkanisiert und damit über eine stoffschlüssige Verbindung an dem äußere Lagerelement (6) befestigt ist.

12. Radaufhängung nach einem der Ansprüche 3 bis 11, **dadurch gekennzeichnet, daß** das ringförmige äußere Lagerelement (6) an zumindest zwei Stellen einen verdickten Bereich (6') mit einer Gewindebohrung (7) aufweist und zwischen den verdickten Bereichen (6') in Umfangsrichtung und/oder rechtwinklig zur Umfangsrichtung einen sich verjüngenden Querschnitt (6'') aufweist.

13. Radaufhängung nach einem der vorstehenden Ansprüche, **dadurch gekennzeichnet, daß** der Lenker (1) ein Querlenker, insbesondere ein Querlenker einer Multi-Lenker-Achse für Hinterräder eines Personenwagens ist.

14. Radaufhängung nach einem der Ansprüche 1 bis 11, **dadurch gekennzeichnet, daß** der Lenker (1) ein Längslenker, insbesondere der Längslenker einer Verbundlenker-Hinterachse für Hinterräder eines Personenwagens ist.

## Claims

1. Wheel suspension for a motor vehicle, which has at least one link (1) connected in an articulated manner to a wheel carrier and to a body of the motor vehicle and a shock absorber (2) with a container tube (4) and with a damper rod (3) capable of being pushed into the container tube (4) counter to a spring force, the damper rod (3) being connected to a sprung region of the body, and the container tube (4) being connected to the link (1) via a damper bearing (5, 6), the damper bearing (5, 6) being arranged concentrically on the container tube (4) and having an inner bearing element (5) connected to the side wall of the container tube (4) and an outer bearing element (6) connected to the link (1), **characterized in that** the outer bearing element (6) is pivotable about the inner bearing element (5) so that the container tube (4) is connected to the link (1) in an articulated manner.

2. Wheel suspension according to Claim 1, **characterized in that** the inner bearing element (5) is a sleeve pushed onto the container tube (4) or is a pushed-on ring, the inner bearing element (5) being connected to the container tube (4) via a press-fit or a positive or materially integral connection.

3. Wheel suspension according to Claim 1 or 2, **characterized in that** the outer bearing element (6) is a bearing ring (6) which is arranged concentrically to the container tube (4) and surrounds the inner bearing element (5) which has a receptacle, particularly in the form of an annular groove, for the resilient or articulated reception of the outer bearing ring.

4. Wheel suspension according to one of the preceding claims, **characterized in that** the outer bearing element (6) is connected to the link (1) rigidly, in particular by means of a screw connection.

5. Wheel suspension according to one of the preceding claims, **characterized in that** the outer bearing element (6) is connected to the link (1) in one piece.

6. Wheel suspension according to one of the preceding claims, **characterized in that** the inner bearing element (5) is formed by a carrier ring pushed onto the container tube (4), with an upper edge region (5') projecting outwards in a collar-like manner, and with a collar-like lower edge region (5") and with an elastic receiving ring (5'") arranged between the upper edge region (5') and the lower edge region (5") and having an essentially annular groove (8), into which the outer bearing element (6) engages.

7. Wheel suspension according to the preceding claim, **characterized in that** the carrier ring of the inner bearing element (5) is of at least two-part design, the upper edge region (5') and the lower edge region (5") being formed in each case by an individual component, and at least the upper edge region (5') being fastened to the container tube (4).

8. Wheel suspension according to Claim 6 or 7, **characterized in that** it has a spring strut which is formed by the shock absorber (2) and a helical spring (9) arranged concentrically to the shock absorber (2), the lower end of the helical spring (9) being supported on the upper edge region (5') of the carrier ring.

9. Wheel suspension according to one of Claims 6, 7 or 8, **characterized in that** the elastic receiving ring (5"') is a rubber ring.

10. Wheel suspension according to the preceding claim and Claim 6, **characterized in that** the elastic receiving ring (5"') is vulcanized onto the carrier ring of the inner bearing element, in particular onto the upper edge region (5') and the lower edge region (5"), and is consequently fastened to the carrier ring via a materially integral connection.

11. Wheel suspension according to Claim 9 or 10, **characterized in that** the elastic receiving ring (5"') is vulcanized onto the outer bearing element (6) and is consequently fastened to the outer bearing element (6) via a materially integral connection.

12. Wheel suspension according to one of Claims 3 to 11, **characterized in that** the annular outer bearing element (6) has at at least two points a thickened region (6') with a threaded bore (7) and between the thickened regions (6') has a narrowing cross section (6") in the circumferential direction and/or at right angles to the circumferential direction.

13. Wheel suspension according to one of the preceding claims, **characterized in that** the link (1) is a transverse link, in particular a transverse link of a multi-link axle for rear wheels of a passenger car.

14. Wheel suspension according to one of Claims 1 to 11, **characterized in that** the link (1) is a longitudinal link, in particular the longitudinal link of a composite-link rear axle for rear wheels of a passenger car.

## Revendications

1. Suspension de roue pour un véhicule automobile, qui présente au moins un bras (1) relié de manière articulée à un support de roue et au châssis du véhicule automobile ainsi qu'un amortisseur (2) doté d'un tube de réservoir (4) et d'une tige d'amortisseur (3) qui peut s'enfoncer dans le tube de réservoir (4) en opposition à la force d'un ressort, la tige d'amortisseur (3) étant reliée à une partie amortie du châssis et le tube de réservoir (4) étant relié au bras (1) par l'intermédiaire d'un palier (5, 6) d'amortisseur, le palier (5, 6) d'amortisseur étant disposé concentriquement autour du tube de réservoir (4) et présentant un élément intérieur (5) de palier relié à la paroi latérale du tube de réservoir (4) ainsi qu'un élément extérieur (6) de palier relié au bras (1), **caractérisée en ce que** l'élément extérieur (6) de palier peut pivoter autour de l'élément intérieur (5) de palier, de telle sorte que le tube de réservoir (4) est relié au bras (1) de manière articulée.

2. Suspension de roue selon la revendication 1, **caractérisée en ce que** l'élément intérieur (5) de palier est une douille ou une bague passées sur le tube de réservoir (4), l'élément intérieur (5) de palier étant relié au tube de réservoir (4) par une adaptation pressée ou une liaison en correspondance de forme ou en correspondance mécanique.

3. Suspension de roue selon les revendications 1 ou 2, **caractérisée en ce que** l'élément extérieur (6) de palier est une bague de palier (6) disposée concentriquement par rapport au tube de réservoir (4) et qui entoure l'élément intérieur (5) de palier qui présente un logement, en particulier en forme de rainure annulaire, pour recevoir la bague extérieure de palier de manière élastique ou articulée.

4. Suspension de roue selon l'une des revendications précédentes, **caractérisée en ce que** l'élément extérieur (6) de palier est relié rigidement au bras (1), en particulier par une liaison filetée.

5. Suspension de roue selon l'une des revendications précédentes, **caractérisée en ce que** l'élément extérieur (6) de palier est relié d'un seul tenant au bras (1).

6. Suspension de roue selon l'une des revendications précédentes, **caractérisée en ce que** l'élément intérieur (5) de palier est formé d'une bague de support passée sur le tube de réservoir (4) et qui présente une bordure supérieure (5') qui déborde vers l'extérieur en forme de collet, une bordure inférieure (5" ) et une bague élastique de réception (5"') disposée entre la bordure supérieure (5') et la bordure inférieure (5") et dotée d'une rainure (8) essentiellement annulaire (8) qui s'engage dans l'élément extérieur (6) de palier.

7. Suspension de roue selon la revendication précédente, **caractérisée en ce que** la bague de support de l'élément intérieur (5) de palier est réalisée en au moins deux pièces, la bordure supérieure (5') et la bordure inférieure (5") sont toutes formées d'un seul composant, au moins la bordure supérieure (5') étant fixée sur le tube de réservoir (4).

8. Suspension de roue selon les revendications 6 ou 7, **caractérisée en ce qu'**elle présente une jambe de ressort qui est formée par l'amortisseur (2) et un ressort hélicoïdal (9) disposé concentriquement par rapport à l'amortisseur (2), l'extrémité inférieure du ressort hélicoïdal (9) s'appuyant sur la bordure supérieure (5') de la bague de support.

9. Suspension de roue selon les revendications 6, 7 ou 8, **caractérisée en ce que** la bague élastique de réception (5"') est une bague en caoutchouc.

10. Suspension de roue selon la revendication précédente et la revendication 6, **caractérisée en ce que** la bague élastique de réception (5"') est vulcanisée sur la bague de support de l'élément intérieur de palier, en particulier sur la bordure supérieure (5') et la bordure inférieure (5") et est ainsi fixée à la bague de support par une liaison en correspondance de matière.

11. Suspension de roue selon les revendications 9 ou 10, **caractérisée en ce que** la bague élastique de réception (5"') est vulcanisée sur l'élément extérieur (6) de palier et est ainsi fixée à l'élément extérieur (6) de palier par une liaison en correspondance de matière.

12. Suspension de roue selon l'une des revendications 3 à 11, **caractérisée en ce que** l'élément extérieur (6) de palier présente en au moins deux emplacements une zone épaissie (6') doté d'un alésage fileté (7) et une section transversale (6") qui se rétrécit à la périphérie et/ou perpendiculairement à la périphérie entre les zones épaissies (6').

13. Suspension de roue selon l'une des revendications précédentes, **caractérisée en ce que** le bras (1) est un bras transversal, en particulier un bras transversal de l'essieu multi-bras des roues arrière d'une voiture automobile.

14. Suspension de roue selon l'une des revendications 1 à 11, **caractérisée en ce que** le bras (1) est un bras longitudinal, en particulier le bras longitudinal de l'essieu arrière à bras de liaison des roues arrière d'une voiture automobile.
